Europäisches Patentamt

(19) European Patent Office

Office européen des brevets

(11) Numéro de publication: **0 106 406**
**B1**

(12) **FASCICULE DE BREVET EUROPEEN**

(51) Int. Cl.⁴: **H 04 L 25/03**

(45) Date de publication du fascicule du brevet:
09.04.86

(21) Numéro de dépôt: 83201432.8

(22) Date de dépôt: 07.10.83

(54) Egaliseur auto-adaptatif pour signal de données en bande de base.

(30) Priorité: 11.10.82 FR 8216997

(43) Date de publication de la demande:
25.04.84 Bulletin 84/17

(45) Mention de la délivrance du brevet:
09.04.86 Bulletin 86/15

(84) Etats contractants désignés:
BE CH DE FR GB IT LI NL SE

(56) Documents cités:
GB - A - 2 086 193

**PATENTS ABSTRACTS OF JAPAN, vol. 4, no. 18, 13
février 1980, page 108 E 171
IEEE TRANSACTIONS ON COMMUNICATION
TECHNOLOGY, vol. COM-19, no. 3, juin 1971, pages
281-293, New York, US, D.A. GEORGE et al.: "An
adaptive decision feedback equalizer"**

(73) Titulaire: **TELECOMMUNICATIONS
RADIOELECTRIQUES ET TELEPHONIQUES T.R.T.,
88, rue Brillat Savarin, F-75013 Paris (FR)**

(72) Inventeur: **Brie, Richard, SOCIETE CIVILE
S.P.I.D. 209 rue de l'Université, F-75007 Paris (FR)
Inventeur: Guidoux, Loïc Bernard Yves, SOCIETE CIVILE
S.P.I.D. 209 rue de l'Université, F-75007 Paris (FR)**

(74) Mandataire: **Charpail, François et al, Société Civile
S.P.I.D. 209, rue de l'Université, F-75007 Paris (FR)**

## Description

L'invention concerne un égaliseur auto-adaptatif utilisé dans le récepteur d'un modem de transmission de données pour corriger en bande de base le signal de données reçu, cet égaliseur comprenant un circuit de différence entre le signal reçu et un signal de correction formé à une fréquence d'échantillonnage par un filtre transversal à coefficients réglables, ce circuit de différence fournissant un signal corrigé qui est appliqué à un circuit de décision restituant le signal de données, ce signal de données restitué étant appliqué à l'entrée du filtre transversal dont les coefficients sont réglés pour rendre minimale une fonction prédéterminée d'un signal d'erreur.

Des égaliseurs travaillant sur un signal des données en bande de base trouvent évidemment une utilisation directe dans des modems recevant des données transmises en bande de base. Mais on peut également utiliser des égaliseurs de ce genre dans des modems recevant des données transmises par modulation d'une porteuse, en faisant travailler ces égaliseurs sur les signaux en bande de base obtenus dans le récepteur par la démodulation du signal reçu.

L'égaliseur envisagé se comporte, vis à vis du signal reçu, comme un filtre récursif dont la boucle comporte en cascade un circuit de décision et un filtre transversal. Dans ce genre d'égaliseur connu sous le nom d'égaliseur avec organe de décision dans la boucle (en anglais "Decision feedback Equalizer"), le filtre transversal travaille, à des instants d'échantillonnage, sur le signal fourni par le circuit de décision et ses coefficients sont à régler pour qu'il engendre, à ces instants d'échantillonnage un signal de correction constitué par une copie du signal d'interférence procuré par les données antérieures à la donnée présentea l'entrée du récepteur. Ce signal de correction est appliqué au circuit de différence pour être soustrait du signal reçu de façon à former un signal corrigé des interférences. Le critère utilisé pour le réglage des coefficients du filtre transversal est la minimisation d'une fonction prédéterminée (généralement la valeur quadratique moyenne) d'un signal d'erreur qui doit être significatif du signal d'interférence subsistant dans le signal corrigé fourni par le circuit de différence.

Dans les égaliseurs connus (voir par exemple un article intitulé "An adaptative Decision Feedback Equalizer", paru dans la revue IEEE Transactions, vo1.CDM-19, n°f, juin 1971, pages 281-292), on forme à chaque instant d'échantillonnage le signal d'erreur comme la différence entre le signal corrigé fourni par le circuit da différence et le signal de données à niveàu fixe restitué par la circuit de décision. Mais un signal d'erreur formé de cette manière dépend non seulement du signal d'interférence procuré par les données antérieures et présent encore dans le signal corrigé tant que l'égaliseur n'a pas convergé, mais aussi du niveau de la donnée actuelle présente aussi dans le signal corrigé puisque c'est elle qui doit çtre restituée par le circuit de décision. Or ce niveau peut varier en fonction de la longueur de la liaison et/ou des conditions de transmission. Pour que le signal d'erreur soit significatif du signal d'interférence, il est nécessaire dans les égaliseurs connus de stabiliser le niveau des données dans le signal appliqué à l'égaliseur, à l'aide d'un dispositif de CAG (commande automatique de gain).

La présente invention fournit le moyen de former d'une autre manière un signal d'erreur significatif du signal d'interférence, sans être tributaire du niveau des données reçues, ce qui permet d'éviter l'emploi d'un dispositif de CAG relativement coûteux et délicat à mettre en oeuvre.

Conformément à l'invention, dans un égaliseur autoadaptatif utilisé dans un modem pour corriger en bande de base le signal de données reçu, les coefficients du filtre transversal sont modifiés à l'aide d'un signal d'erreur oui est déterminé à un présent instant d'échantillonnage en formant la différence entre la valeur du signal corrigé à cet instant d'échantillonnage et la valeur du signal corrigé à un instant d'échantillonnage antérieur, préalablement multipliée par le rapport de la valeur du signal de données restitué au présent instant d'échantillonnage à la valeur du signal de données restitué à l'instant d'échantillonnage antérieur, la modification des coefficients étant effectuée ou non selon que les deuxdites valeurs du signal de données restitué sont différentes de zéro ou au moins l'une des deuxdites valeurs est égale à zéro.

L'égaliseur de l'invention permet de supprimer les interférences dans le signal de données reçu, que ce signal reçu résulte du côté émission d'un signal de données multiniveaux, d'un signal de données à deux niveaux ou d'un signal de données à trois niveaux résultant du codage pseudoternaire de données à deux niveaux.

Dans le cas de données émises à deux niveaux ou de données à trois niveaux résultant d'un codage pseudoternaire, le circuit de décision du récepteur peut restituer des données à deux niveaux positif et négatif et le signal d'erreur $e(n)$ peut être formé dans un circuit de calcul comme la différence ou la somme des valeurs du signal corrigé au présent instant d'échantillonnage $n$ et à un instant d'échantillonnage antérieur, selon que les valeurs du signal de données restitué au présent instant d'échantillonnage $n$ et à un instant d'échantillonnage antérieur ont le même signe ou des signes différents.

On obtient un mode de réalisation particulièrement simple de l'égaliseur de l'invention en utilisant pour le réglage des coefficients du filtre transversal le signal $Sgn[e(n)]$, caractérisant le signe du signal d'erreur $e(n)$, formé par exemple comme on vient de l'indiquer dans le cas d'un signal de données restitué à deux niveaux.

La description suivante, en regard des dessins annexés, le tout donné à titre d'exemple fera bien comprendre comment l'invention peut être réalisée.

La figure 1 montre la structure d'un égaliseur auquel s'applique l'invention.

La figure 2 représente le schéma du circuit de réglage d'un coefficient du filtre transversal de l'égaliseur.

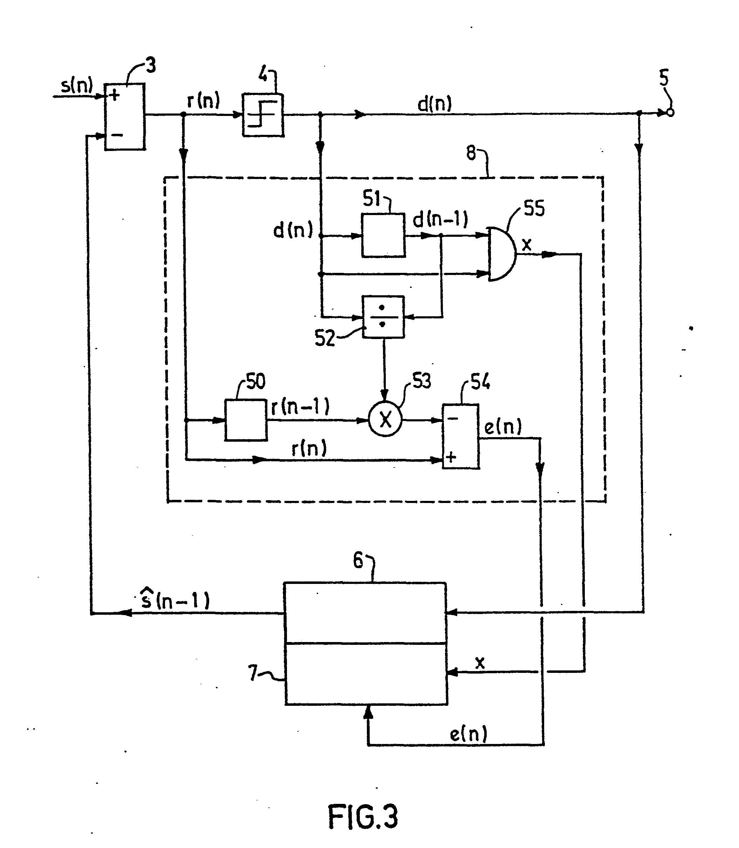

La figure 3 représente dans le cas général le schéma de Principe de l'égaliseur conforme à l'invention.

La figure 4 représente le schéma d'un mode de réalisation de l'égaliseur de l'invention, convenant à un récepteur restituant des données à deux niveaux.

La figure 5 représente des diagrammes de signaux destinés à expliquer le fonctionnement de l'égaliseur de la figure 4.

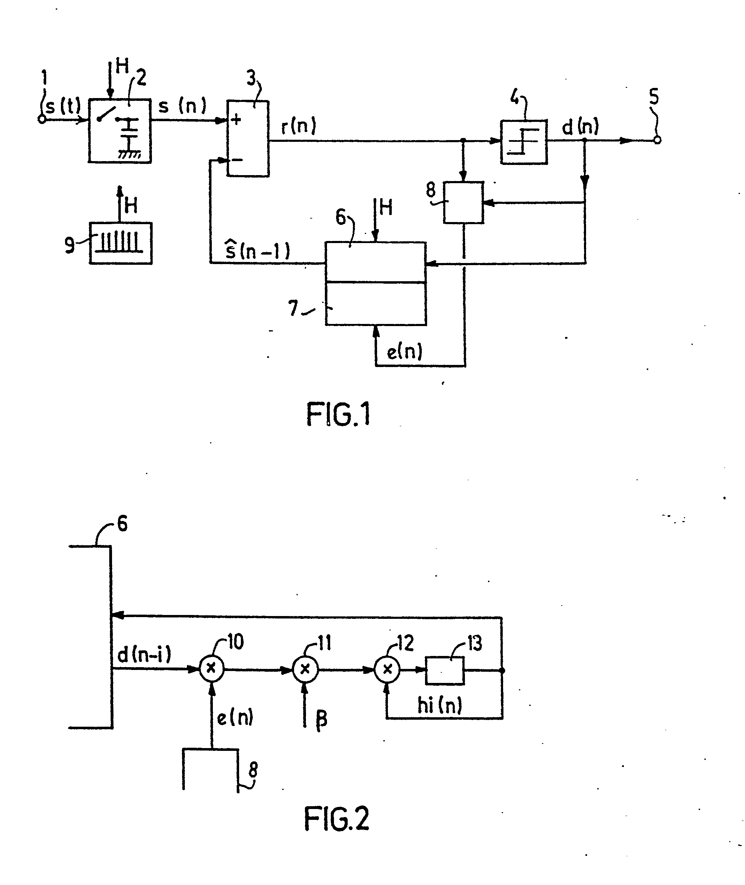

La figure 1 montre la structure connue d'un égaliseur du genre formé par un filtre récursif avec l'organe de décision dans la boucle de ce filtre.

On suppose que cet égaliseur est utilisé dans le récepteur d'un modem de transmission de données en bande de base. Le signal s(t) appliqué à l'entrée 1 de cet égaliseur est alors le signal reçu dans le récepteur et provenant d'un émetteur distant, émettant un signal de données à deux niveaux ou un signal de données à trois niveaux résultant d'un codage pseudoternaire de données à deux niveaux ou enfin des données multiniveaux.

Dans l'exemple représenté sur la figure 1, le signal de données reçu s(t) est d'abord échantillonné dans le circuit 2 d'échantillonnage et de maintien, avec une fréquence d'échantillonnage

$$H = \frac{1}{Te}$$

fournie par le générateur d'horloge 9 qui est synchronisé par des moyens connus sur la fréquence des données reçues. Dans la plupart des égaliseurs en bande de base connus, la fréquence d'échantillonnage H est égale à la fréquence des données. En caractérisant par le nombre entier n les instants nTe d'échantillonnage, le signal échantillonné apparaissant à la sortie du circuit 2 peut être noté s(n). Pour conserver la simplicité du schéma de la figure 1, on suppose que le traitement du signal échantillonné s(n) dans l'égaliseur est effectué en analogique.

Du fait des distorsions d'amplitude et/ou de phase dont peut être affecté le milieu de transmission entre l'émetteur et le récepteur, le signal reçu s(n) dépend non seulement de la donnée d(n) émise au même instant n, mais d'un certain nombre de données émises avant l'instant n.

Le signal reçu s(n) peut s'écrire:

$$s(n) = \sum_{i=0}^{N} t_i \cdot d(n-i) \qquad (1)$$

Dans cette formule, $t_i$ représente des échantillons de la réponse impulsionnelle du milieu de transmission, aux instants i allant de l'instant de référence 0 à l'instant N; pour les instants i tels que i > N, ces échantillons sont supposés nuls. d(n - i) représente les données émises aux instants (n - i).

Il est utile pour la suite d'écrire la formule (1) sous la forme:

$$s(n) = t_o \cdot d(n) + \sum_{i=1}^{N} t_i \cdot d(n-i) \qquad (2)$$

Dans cette formule (2), $t_o$ est l'échantillon central de la réponse impulsionnelle du milieu de transmission (ou le coefficient de transmission de ce milieu) et le terme t.d(n) représente la contribution dans le signal reçu s(n) de la donnée émise d(n) au même instant n. Le terme de somme

$$\sum_{i=1}^{N} t_i \cdot d(n-i)$$

représente la contribution dans le signal reçu s(n) des données antérieures à l'instant n et émises aux instants n - 1 à n - N.

Ce dernier terme correspond dans le signal reçu à un signal intempestif, appelé souvent signal d'interférence, qui peut gêner considérablement la restitution correcte des données d(n). L'égaliseur envisagé a pour but d'élaborer un signal de correction consistant en une copie du signal d'interférence et de soustraire ce signal de correction du signal reçu pour obtenir un signal corrigé dans lequel le signal d'interférence est pratiquement annulé.

L'égaliseur de la figure 1 comprend pour cela un circuit de différence f recevant sur son entrée (+) le signal reçu s(n) et sur son entrée (−) le signal de correction ŝ(n - 1), et fournissant le signal corrigé r(n) = s(n) - ŝ(n - 1). On peut remarquer ici que le signal de correction destiné à corriger le signal s(n) à un instant n a été noté ŝ(n - 1) parce que, comme on le verra par la suite, il est calculé à l'aide de données antérieures à l'instant n, à partir de la donnée d(n - 1). Ce signalcorrigé est appliqué à un circuit de décision 4 qui, lorsque l'égaliseur a convergé, restitue les données d(n) fournies à l'émetteur. Si les données d(n) ont deux niveaux positif et négatif, le circuit de décision 4 fournit un signal qui est le signe de r(n), soit Sgn [r(n)]. Si les données d(n) ont été codées en pseudoternaire avant d'être émises, le circuit de décision 4 fournit un signal à deux niveaux poaitif et négatif, correspondant au signal à trois niveaux du code pseudoternaire. Si enfin, les données d(n) sont du type multiniveaux, le circuit de décision 4 fournit un signal ayant les mêmes niveaux que les données émises. Le signal restitué par le circuit de décision 4 est dirigé vers la borne de sortie 5 de l'égaliseur. En même temps, ce signal restitué est appliqué à l'entrée du filtre transversal 6 qui fonctionne à la fréquence d'échantillonnage H et qui est chargé de fournir le signal de correction $\hat{s}(n - 1)$, appliqué à l'entrée $(-)$ du circuit de différence f. Le filtre transversal 6 est agencé de façon usuelle pour stocker à chaque instant n, N échantillons d(n - i) du signal des données restitué par le circuit de décision 4 et pour calculer des échantillons de sortie $\hat{s}(n - 1)$ selon l'expression:

$$\hat{s}(n - 1) = \sum_{i = 1}^{N} h_i \, d(n - i) \qquad (3)$$

$h_i$ représentant les coefficients du filtre.

Les coefficients $h_i$ du filtre sont réglables et réglés dans le circuit de réglage 7, de façon à minimiser une fonction prédéterminée d'un signal d'erreur e(n) qui est élaboré dans le circuit de calcul 8 et qui doit être significatif du signal l'interférence subsistant dans le aignal corrigé r(n), tant que l'égaliseur n'a pas convergé. On expliquera plua loin le mode de calcul du signal d'erreur. Généralement, les coefficients sont réglés de façon à minimiaer la valeur quadratique moyenne du signal d'erreur e(n), soit $E \, [ \, |e(n)|^2]$. Dans ce cas, en utilisant l'algorithme du gradient, les coefficients $h_i$ sont réglés par récurrences successives, suivant la formule de récurrence:

$h_i(n + 1) = h_i(n) + \alpha.E[ \, d(n - i).e(n) \, ] \ (4)$

Dans cette formule (4), $\alpha$ est un coefficient inférieur à 1.

Dans la pratique, pour éviter d'avoir à calculer une valeur moyenne, opération indiquée par l'opérateur E, on utilise plutôt la formule de récurrence:

$h_i(n + 1) = h_i(n) + \beta.d(n - i).e(n) \ (5)$

Dans cette formule, $\beta$ est un coefficient fixe de valeur faible par rapport à 1, qui conditionne la grandeur des modifications à apporter aux coefficienta $h_i(n)$ à la récurrence n, pour obtenir les coefficients $h_i(n + 1)$ à la récurrence $(n + 1)$.

La formule pratique de récurrence (5) peut être mise en oeuvre dana le circuit de réglage 7, selon un schéma représenté sur la figure 2 pour un coefficient $h_i$. Le signal de données d(n - i), disponible dans une case mémoire du filtre transversal 6 est appliqué à un circuit multiplicateur 10 pour être multiplié par le signal d'erreur e(n) élaboré dans le circuit 8. Le produit ainsi formé est appliqué au circuit multiplicateur 11 pour être multiplié par le coefficient fixe $\beta$. Le terme de modification $\beta.d(n - i).\varepsilon(n)$ ainsi formé est appliqué à un accumulateur formé par le circuit additionneur 12 et la mémoire 13 procurant un retard d'une période d'échantillonnage $T_e$. Le circuit additionneur forme la somme du terme de modification calculé à l'instant n et du coefficient $h_i(n)$ apparaissant à l'instant n à la sortie de la mémoire 13. Cette somme disponible à l'instant $n + 1$ à la sortie de la mémoire lf, constitue le coefficient $h_i(n + 1)$ à utiliser à l'instant $n + 1$, dans le filtre transversal 6.

On peut aussi utiliser pour le réglage des coefficients $h_i$, une formule de récurence plus simple que la formule (5), en y remplaçant le signal d'erreur e(n) par son signe, qui peut s'écrire Sgn [e(n)]. La formule de récurrence (5) devient alors:

$h_i(n + 1) = h_i(n) + \beta.d(n - i).Sgn \, [e(n)] \ (6)$

Dans les égaliseurs connus, par exemple dans l'égaliseur décrit dans l'article précité de la revue IEEE Transactions, le signal d'erreur e(n) utilisé pour le réglage des coefficients $h_i$ selon les formules de récurrence (4), (5) ou (6), est déterminé en formant la différence entre le signal restitué par le circuit de décision 4 et le signal corrigé r(n) fourni par le circuit de différence f. On peut déduire des formules (2) et (f) que le signal corrigé $r(n) = s(n) - \hat{s}(n - 1)$ peut s'écrire alors:

$$r(n) = \left[ \sum_{i = 1}^{N} (t_i - h_i)d(n - i) \right] + t_0.d(n) \qquad (7)$$

Dans cette formule le premier terme entre crochets est le signal d'interférence résiduel subsistant dans le signal corrigé r(n) tant que l'égaliseur n'a pas complètement convergé et le dsuxième terme $t_0.d(n)$ correspond aux données émises d(n) pondérées par le coefficient de transmission $t_0$ du milieu de transmission, c'est-à-dire correspond pratiquement au niveau des données reçues. On en déduit les limites d'emploi des égaliseurs connus. Dans ces égaliseurs, le signal d'erreur e(n) formé par différence entre le signal de niveau fixe restitué par le circuit de décision et le signal corrigé r(n), dépend non seulement du signal d'interférence résiduel, comme cela est requis, mais également du niveau $t_0.d(n)$ des données reçues. Dans le cas où le coefficient de transmission $t_0$ est variable, les égaliseurs connus fonctionnent mal et ne peuvent annuler le signal d'interférence. Pour obtenir un fonctionnement correct de ces égaliseurs, on peut utiliser un dispositif de CAG stabilisant le niveau du signal s(t) appliqué à l'égaliseur.

**0 106 406**

La présente invention fournit un autre moyen de calcul d'un signal d'erreur e(n), pratiquement non tributaire du niveau du signal reçu et évitant donc les inconvénients des égaliseurs connus.

Dans l'égaliseur conforme à l'invention, le signal d'erreur e(n) servant à modifier les coefficients $h_i$ du filtre transversal 7 est déterminé à un instant d'échantillonnage n en formant la différence entre la valeur du signal corrigé r(n) à l'instant n et la valeur du signal corrigé à un instant d'échantillonnage antérieur à l'inatant n, cette dernière valeur ayant été préalablement multipliée par le rapport de la valeur de la donnée d(h) restituée par le circuit de décision 4 à l'instant n à la valeur de la donnée restituée audit instant d'échantillonnage antérieur. L'inatant d'échantillonnage antérieur conaidéré peut être par exemple l'inatant d'échantillonnage n - 1 précédant juate l'inatant n et dana ce caa le signal d'erreur e(n) peut s'exprimer par la formule:

$$e(n) = r(n) - r(n - 1) \cdot \frac{d(n)}{d(n - 1)} \qquad (8)$$

Il est clair que dans cette formule, la multiplication de la valeur antérieure r(n-l) du signal corrigé par le rapport

$$\frac{d(n)}{d(n - 1)}$$

a pour but de "normaliser" cette valeur antérieure, par rapport à la présente valeur r(n) du signal corrigé, afin que la différence ait toujours la même signification, indépendante des valeurs des données. Lorsque le signal de données restitué par le circuit de décision 4 n'a pas de niveau zéro, les modifications de coefficients sont toujours effectuées avec le signal d'erreur e(n): ceci se produit par exemple pour des données multiniveaux sans niveau zéro, ou pour des données à deux niveaux ou pour des données codées en pseudoternaire. Lorsque le signal de données restitué par le circuit de décision 4 est du type comprenant un niveau zéro, les modifications des coefficients sont effectuées selon la formule (8) lorsque lea deux valeurs des données d(n) et d(n - 1) sont différentes de zéro et ne aont pas effectuées lorsqu'au moins l'une de ces deux valeurs est égale à zéro.

La mise en oeuvre de l'invention peut être réalisée dans le cas général comme l'indique la figure f. Sur cette figure f, on a représenté avec les mêmes références les principaux éléments de l'égaliseur de la figure 1, en fournissant de plus le schéma du circuit 8 de calcul de l'erreur e(n) conformément à l'invention. Le signal corrigé fourni par le circuit de différence f est appliqué à un circuit de retard 50 produisant un retard égal par exemple à une période d'échantillonnage de sorte qu'à un instant d'échantillonnage n, on obtient à l'entrée et à la sortie de ce circuit 50, les valeurs r(n) et r(n - 1) du signal corrigé. Les données restituées par le circuit de décision 4 sont appliquées à un circuit de retard 51 produisant aussi un retard égal à une période d'échantillonnage, de sorte qu'à l'instant n, on obtient à l'entrée et à la sortie de ce circuit de retard 51, les valeurs d(n) et d(n - 1) des données. Le rapport

$$\frac{d(n)}{d(n - 1)}$$

est formé dans le circuit 52. Le circuit multiplicateur 53 forme le produit r(n - 1).

$$\frac{d(n)}{d(n - 1)}$$

qui est appliqué à l'entrée (-) du circuit de différence 54. Ce circuit de différence 54 reçoit sur son entrée (+) la quantité r(n) et fournit ainsi conformément à la formule (8) le signal d'erreur e(n) qui est appliqué au circuit de réglage 7 des coefficients du filtre transversal 6. Par ailleurs une porte ET 55 a ses deux entrées connectées respectivement à l'entrée et à la sortie du circuit de retard 51. La porte ET 55 fournit un signal logique x, qui autorise la modification des coefficients par le signal d'erreur e(n) lorsque les deux valeurs de données d(n) et d(n - 1) sont différentes de zéro et n'autorise pas cette modification lorsqu'au moins l'une de ces valeurs d(n) et d(n - 1) est égale à zéro. L'action du signal logique x peut être par exemple d'annuler le terme de modification des coefficients appliqué au circuit additionneur 12 (voir figure 2), lorsque la modification n'est pás autorisée.

Dans le cas où le signal de données émis a deux niveaux ou trois niveaux résultant d'un codage pseudoternaire de données à deux niveaux, le circuit de décision 4 restitue des données à deux niveaux positif et négatif, sous la forme du signe du signal corrigé r(n)- Dans ce cas le signal e(n) de la formule (8) peut se mettre sous la forme:

5

(9) $e(n) = r(n) - r(n - 1).Sgn [r(n)].Sgn [r(n - 1)]$ .

On en déduit que l'on peut alors baser le calcul du signal d'erreur e(n) sur les relations:

$$(10) \quad \begin{cases} e(n) = r(n) - r(n - 1) & \text{si } PS(n) > 0 \\ e(n) = r(n) + r(n - 1) & \text{si } PS(n) < 0 \end{cases}$$

avec $PS(n) = Sgn [r(n)].Sgn [ r(n - 1)]$.

On va maintenant montrer que si les coefficients $h_i$ du filtre transversal de l'égaliseur sont réglés de façon à minimiser la valeur quadratique moyenne du signal d'erreur e(n) formé comme on vient de l'expliquer, c'est-à-dire sont réglés selon la formule de récurrence (4) ou (5) en y utilisant ce signal d'erreur e(n), ces coefficients $h_i$ convergent vers les échantillons $t_i$ de la réponse impulsionnelle du milieu de transmission, i allant de 1 à N, ce qui signifie l'annulation du signal d'interférence, sans que les variations du coefficient central $t_o$ de cette réponse impulsionnelle soit gênantes, comme dans les égaliseurs connus. Pour simplifier, on se placera pour cette démonstration, dans le cas où les données restituées par le circuit de décision 4, ont deux niveaux ($+ 1$ et $- 1$) et où donc le signsl d'erreur e(n) peut s'exprimer par la formule (9).

En formulant le signal corrigé r(n - 1) à l'instant n - 1, de la même manière que le signal corrigé r(n) à l'instant n selon la formule (7), on obtient:

$$r(n - 1) = \left[ \sum_{i = 1}^{N} (t_i - h_i).d(n - i - 1) \right] + t_o.d(n - 1) \quad (11)$$

Comme la formule (7), cette formule (11) suppose que les coefficients $t_i$ de la réponse impulsionnelle du milieu de transmission sont nuls pour $i > N$.

On suppose maintenant que dans le signal corrigé r(n), la contribution des données d(n) en provenance de l'émetteur est prépondérante. Comme ces données d(n) ont la valeur $+ 1$ ou $- 1$, on a avec cette hypothèse:

$Sgn [ r(n)] = d(n)$ et $Sgn [ r(n - 1)] = d(n - 1)$ et le signal d'erreur

e(n) selon la formule (9) peut s'écrire:

$e(n) = r(n) - r(n - 1).d(n).d(n - 1)$

En utilisant les formules (7) et (11), le signal d'erreur e(n) s'écrit donc:

$$e(n) = \left[ \sum_{i = 1}^{N} (t_i - h_i).d(n - i) \right] + t_o.d(n)$$

$$- \left[ \sum_{i = 1}^{N} (t_i - h_i).d(n-i-1) \right] d(n).d(n-1) - t_o.d(n).d(n-1).d(n-1)$$

soit, en tenant compte du fait que, avec des données égales à $+ 1$ ou $- 1$, $d(n - 1).d(n - 1) = 1.$.

$$e(n) = \left[ \sum_{i = 1}^{N} (t_i - h_i).d(n-i) \right] - \left[ \sum (t_i - h_i).d(n-i-1) \right] d(n).d(n-1) \quad (12)$$

Cette dernière formule montre donc que le signal d'erreur e(n) est indépendant du coefficient de transmission $t_o$ du milieu de transmission, si le signe du signal corrigé est déterminé par le signe des données en provenance de l'émetteur. Il paraît tout à fait légitime de supposer que cette hypothèse est vérifiée, au moins à certains instants d'échantillonnage et éventuellement après une période d'apprentissage de l'égaliseur.

On va maintenant démontrer la convergence de l'égaliseur de l'invention, utilisant pour le réglage des coefficients $h_i$ du filtre transversal le signal d'erreur e(n) selon la formule (9). Comme dans tous les égaliseurs, on suppose que les données émises d(n) sont statistiquement indépendantes, ce qui est vérifié en pratique pour des données quelconques.

Pour simplifier l'écriture, on va utiliser la notation vectorielle, en posant respectivement pour les transposées de vecteurs $\vec{t}$, $\vec{h}(n)$, $\vec{D}(n)$ et $\vec{D}(n-1)$:

$\underline{t} = [\, t_1, t_2, \ldots t_N\, ]$

$\underline{h}(n) = [\, h_1(n), h_2(n), \ldots h_N(n)]$

$\underline{D}(n) = [\, d(n-1), d(n-2), \ldots d(n-N)]$

$\underline{D}(n-1) = [\, d(n-2), d(n-f), \ldots d(n-N-1)]$

Avec cette notation, le signal d'erreur e(n) selon la formule (12) s'écrit:

$e(n) = \underline{D}(n)[\, \vec{t} - \vec{h}(n)] - \underline{D}(n-1)[\, \vec{t} - \vec{h}(n)].d(n).d(n-1)$ (13)

Par ailleurs la formule de récurrence (4) utilisée pour le réglage des coefficients du filtre transversal, s'écrit en notation vectorielle:

$\vec{h}(n+1) = \vec{h}(n) + \alpha.E[\, \vec{D}(n).e(n)\, ]$ (14)

En utilisant l'expression de e(n) donnée par la formule (13), on obtient pour la valeur moyenne $E[\,\vec{D}(n).e(n)]$ intervenant dans la formule (14):

$E[\vec{D}(n).e(n)] = [\, \vec{t} - \vec{h}(n)].E[\, \vec{D}(n).\underline{D}(n)]$

$-[\vec{t} - \vec{h}(n)].E[\, \vec{D}(n).\underline{D}(n-1).d(n).d(n-1)]$

Dans cette expression de $E[\vec{D}(n).e(n)]$, le deuxième terme est égal à zéro. En effet, la matrice $\vec{D}(n).\underline{D}(n-1)$ n'a aucune composante contenant la donnée d(n) et ses composantes multipliées par d(n).d(n-1) ont toutes une valeur moyenne égale à zéro, dans l'hypothèse faite où les données sont statistiquement indépendantes. Avec cette même hypothèse, on peut montrer que la matrice $E[\vec{D}(n).\underline{D}(n)]$ peut se mettre sous la forme $\|.\sigma^2.\|$ étant la matrice identité et $\sigma^2$ un facteur caractérisant la puissance des données. Dans ces conditions, la formule de récurrence (14) peut s'écrire:

$\vec{h}(n+1) = \vec{h}(n) + \alpha[\, \vec{t} - \vec{h}(n)]\sigma^2$

La forme classique de cette formule de récurrence permet d'écrire, lorsque n tend vers l'infini:

$\vec{h}(n) = [1\alpha\sigma^2]^n + \vec{t}$

Avec un coefficient $\alpha$ choisi assez faible pour que $\alpha\sigma^2 < 1$, on obtient pratiquement $\vec{h}(n) \cong \vec{t}$, pour un nombre de récurrences n suffisament grand, ce qui démontre la convergence de l'égaliseur.

Jusqu'à présent, on s'est placé dans le cas où pour le calcul du signal d'erreur e(n) à un instant d'échantillonnage n on utilisait selon la formule (8) les valeurs du signal corrigé et des données restituées à l'instant n et à l'instant d'échantillonnage antérieur n - 1, précédant juste l'instant n. Dans ce cas le signal d'erreur est calculé à la fréquence d'échantillonnage, ce qui est la fréquence avec laquelle sont calculés les échantillons de sortie du filtre transversal. Mais on pourrait aussi utiliser pour le calcul du signal d'erreur e(n), les valeurs du signal corrigé et des données restituées à d'autres instants antérieurs précédant l'instant n et tels que n - 2, n - 3,...etc. Dans ce cas le signal d'erreur peut être calculé à une fréquence plus faible que la fréquence d'échantillonnage, ce qui n'empêche pas que le filtre transversal peut travailler à la fréquence d'échantillonnage choisie. Cette technique qui permet de diposer d'un intervalle de temps plus important pour le calcul du signal d'erreur peut être utile lorsque l'on est conduit à des fréquences d'échantillonnage élevées. Ceci peut se produire par exemple pour des transmissions de données en bande de base à vitesse élevée, si l'on échantillonne de plus à une fréquence supérieure à la fréquence des données pour réaliser l'égalisation dans une large bande du signal reçu.

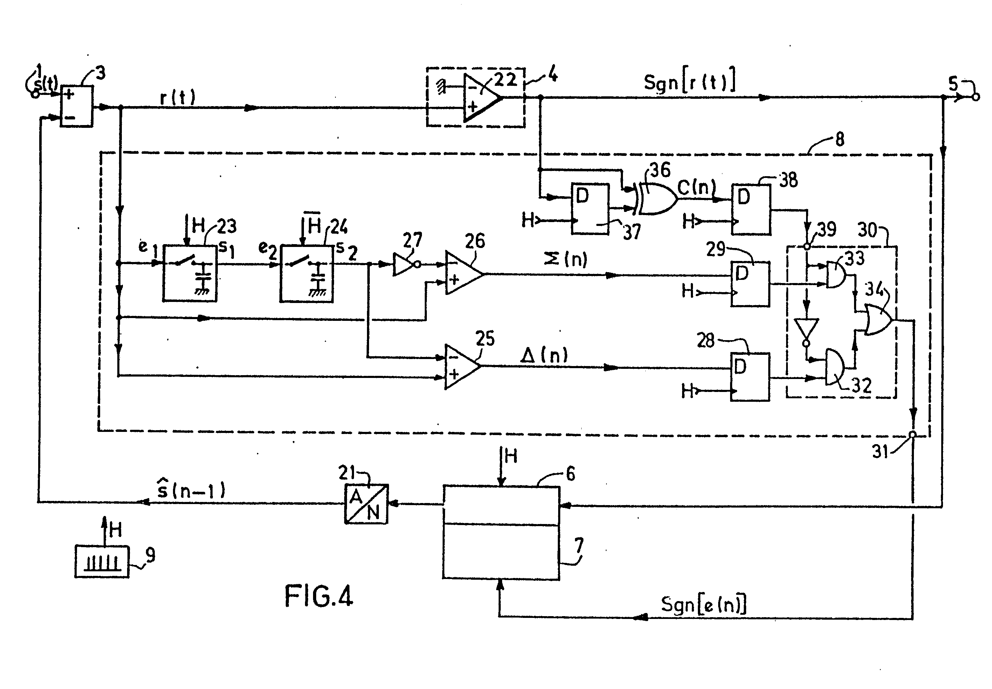

On va maintenant décrire à l'aide de la figure 4 un mode de réaliaation particulièrement simple de l'égaliseur de l'invention, s'appliquant à un récepteur restituant des données à deux niveaux positif et négatif. Dans ce mode de réalisation les coefficients $h_i$ sont réglés selon la formule de récurrence (6) dans laquelle on utilise, pour le calcul des termes de modification des coefficients, le signe du signal d'erreur, noté Sgn [e(n)] et qui est à fournir par le circuit de calcul 8. L'élaboration des quantités Sgn [e(n)] dans ce circuit 8 est basée sur les relations suivantes, directement déduites des relations (10):

$$(15) \quad \begin{cases} \mathrm{Sgn}\Big[e(n)\Big] = \mathrm{Sgn}\Big[r(n) - r(n-1)\Big] & \text{si } PS(n) > 0 \\[2mm] \mathrm{Sgn}\Big[e(n)\Big] = \mathrm{Sgn}\Big[r(n) + r(n-1)\Big] & \text{si } PS(n) < 0 \end{cases}$$

$$\text{avec } PS(n) = \mathrm{Sgn}\Big[r(n)\Big].\mathrm{Sgn}\Big[r(n-1)\Big]$$

Dans l'égaliseur représenté sur la figure 4, les éléments ayant les mêmes fonctions que sur la figure 1 sont munis des mêmes références. Dans cet égaliseur le signal s(t) à égaliser n'est pas d'abord échantillonné comme sur la figure 1, mais appliqué directement à l'entrée (+) du circuit de différence 3. L'entrée (-) de ce dernier reçoit le signal analogique de correction ŝ (n - 1) fourni par le convertisseur 21 qui convertit en analogique les échantillons numériques fournis par le filtre transversal 6, de type numérique. Le signal corrigé r(t) = s(t) - ŝ(n - 1) fourni par le circuit de différence 3 est appliqué à la borne (+) du circuit comparateur 22, dont la borne (−) est au potentiel 0 de la masse. Le circuit comparateur 22 détermine ainsi le signe r(t) et joue le rôle du circuit de décision 4. Il restitue un signal Sgn[r(t)] correspondant aux données émises d(n) et ayant la valeur + 1 ou - 1 selon que r(t) est positif ou négatif. Le signal de données restitué par le circuit de décision 4 est appliqué à l'entrée du filtre transversal 6 dans lequel il est échantillonné à la fréquence d'échantillonnage

$$H = \frac{1}{Te}$$

fournie par le générateur d'horloge 9. Dans ce filtre 6 sont calculés les échantillons numériques du signal de correction ŝ(n - 1) suivant la formule (3) ci-dessus.

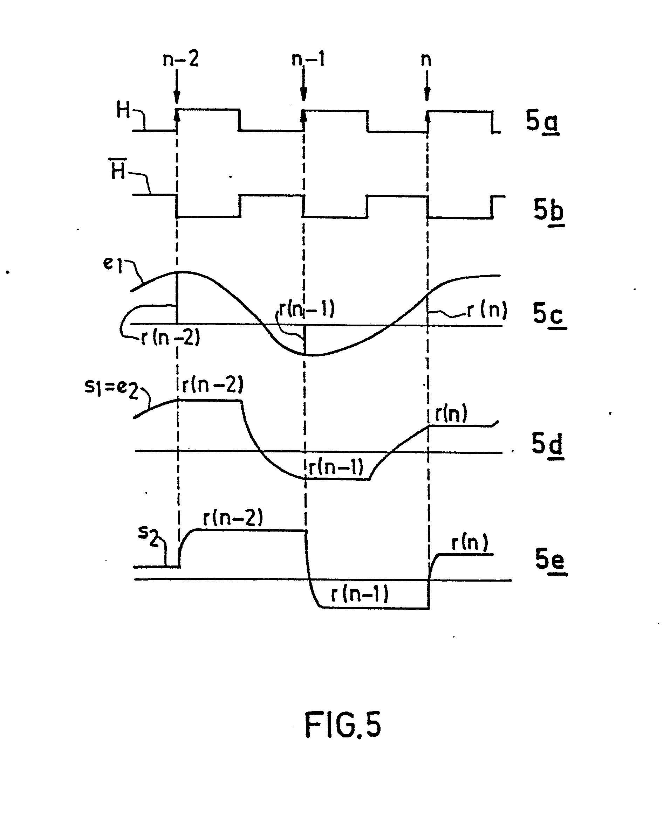

Le circuit 8 chargé de former les quantités Sgn[e(n)], selon l'une ou l'autre des formules (15), est constitué de la façon suivante. Le signal corrigé r(t) est appliqué au montage en cascade de deux circuits d'échantillonnage et de maintien 23 et 24. Le premier circuit 23 est actionné par le signal d'horloge H ayant la fréquence d'échantillonnage

$$\frac{1}{Te}$$

et le deuxième circuit 24 est actionneé par le signal complémentaire H̄. Le fonctionnement de ce montage 23, 24 est expliqué à l'aide de la figure 5. Le diagramme 5a représente le signal d'horloge H avec des fronts montants se produisant aux instants n - 2, n - 1 et n. Le diagramme 5b représente le signal H̄. Le diagramme 5c représente le signal analogique r(t) qui est appliqué à l'entrée $e_1$ du circuit 23 et qui a les valeurs r(n) - 2), r(n - 1̄), r(n) aux instants n - 2, n - 1, n. On suppose que les circuits d'échantillonnage 23 et 24 sont passants quand leurs signaux de commande H ou H̄ sont à l'état bas et bloqués quand ces signaux sont à l'état haut. On en déduit l'allure du signal à la sortie $s_1$ du circuit 23 (c'est-à-dire à l'wnreée $e_2$ du circuit 24), telle qu'elle est représentée sur le diagramme 5d. Enfin, l'allure du signal à la sortie $s_2$ du circuit 24, représentée sur le diagramme 5e, se déduit du diagramme 5d, en tenant compte d'un certain temps d'établissement du signal, lorsque le circuit 24 devient passant. Les diagrammes de la figure 5 montrent clairement que juste avant un front montant de l'horloge H, par exemple celui qui se produit à l'instant n, le signal à l'entrée $e_1$ du circuit 23 a la valeur r(n) et le signal à la sortie $s_2$ du circuit 24 a la valeur r(n - 1).

Le signal r(t) est d'autre part appliqué à l'entrée (+) des deux circuits comparateurs 25 et 26. Le signal obtenu à la sortie $s_2$ du circuit 24 est appliqué directement à l'entrée (−) du circuit comparateur 25 et, via un amplificateur inverseur 27, à l'entrée (−) du circuit comparateur 26.

De cette manière, à la sortie du circuit comparateur 25, on obtient juste avant le front montant de l'horloge H à l'instant n, un signal logique $\Delta(n)$ ayant la valeur:
$\Delta(n) = 1$ si r(n) - r(n - 1) > 0
et $\Delta(n) = 0$ si r(n) - r(n - 1) < 0
A la suite du circuit comparateur 26, on obtient au même instant un signal logique $\Sigma(n)$ ayant la valeur:
$\Sigma(n) = 1$ si r(n) + r(n - 1) > 0
et $\Sigma(n) = 0$ si r(n) + r(n - 1) < 0
Avec la convention que les valeurs logiques 1 et 0 représentent respectivement les signes + et −, les signaux

$\Delta(n)$ et $\Sigma(n)$ représentent bien les quantités Sgn[r(n) - r(n - 1)] et Sgn[r(n) + r(n - 1)] nécessaires selon les formules (15) pour obtenir la quantité Sgn[e(n)].

Les signaux $\Delta(n)$ et $\Sigma(n)$ ainsi formés sont appliqués à l'entrée D des bascules 28 et 29, pour être échantillonnés sur les fronts montants du signal d'horloge H. Les signaux $\Delta(n)$ et $\Sigma(n)$ échantillonnés sont appliqués au dispositif d'aiguillage 30 qui est chargé, en application des formules (15), de diriger vers la sortie 31 du circuit de calcul 8 soit le signal'$\Delta(n)$, soit le signal $\Sigma(n)$ selon que la quantité PS(n) est positive ou négative. Le dispositif d'aiguillage 30 est formé de façon usuelle à l'aide des portes ET 32 et 33, de la porte OU 34 et du circuit inverseur 35 montés comme l'indique la figure. 11 est commandé par un signal logique de commande apparaissant sur sa borne de commande 39 et représentatif de la quantité PS(n). Ce signal de commande est formé de la façon suivante: le signal de sortie du circuit de décision 4, qui représente la quantité Sgn[r(t)] est appliqué simultanément à une première entrée du circuit OU Exclusif 36 et à l'entrée D de la bascule 37 pour être échantillonné aux fronts montants de l'horloge H. La sortie de la bascule 37 est connectée à la deuxième entrée du circuit OU Exclusif 36. A l'instant n d'un front montant de l'horloge H, la première entrée du circuit OU Exclusif 36 reçoit donc la quantité Sgn[r(n)] tandis que sa deuxième entrée reçoit la quantité Sgn[r(n - 1)] qui avait été emmagasinée dans la bascule 37 à l'instant précédent n - 1. A la sortie du circuit OU Exclusif 36 on obtient ainsi un signal C(n) ayant la valeur 1 quand la quantité PS(n) = Sgn[r(n)].Sgn[r(n - 1)] est négative et la valeur 0 quand la quantité PS(n) est positive. Le signal C(n) est appliqué à l'entrée D de la bascule 38 pour être échantillonné aux fronts montants de l'horloge H. La sortie de la bascule 38 fournit le signal de commande du dispositif d'aiguillage 30. On voit clairement, d'après le schéma de ce dispositif d'aiguillage, que selon que C(n) = 1 (c'est-à-dire PS(n) < 0) ou C(n) = 0 (c,està-dire PS(n) > 0), c'est le signal $\Sigma(n)$ ou le signal $\Delta(n)$ qui apparaît sur la borne 31, après l'instant n du front montant de l'horloge H. Ce signal apparaissant sur la borne 31 est représentstif de la quantité Sgn[e(n)] à utiliser dans le circuit de réglage 7 des coefficients du filtre transversal 6.

Dans le mode da réalisation que l'on vient de décrire on a supposé que le signal d'erreur e(n) était formé à la fréquence d'échantillonnage H =

$$H = \frac{1}{Te}$$

déterminant le fonctionnement du filtre transversal à partir d'échantillons consécutifs r(n) et r(n - 1) du signal corrigé. Dans le cas où l'on désire que ce signal d'erreur soit formé à une fréquence plus faible, par exemple

$$\frac{H}{2},$$

c'est-à-dire à partir d'échantillons r(n) et r(n - 2) du signal corrigé, il suffit d'utiliser dans le circuit 8 de calcul d'erreur le signal d'horloge à la fréquence

$$\frac{H}{2},$$

tout en conservant la fréquence d'échantillonnage H pour le filtre transversal 6.

**Revendications:**

1. Egaliseur auto-adaptatif utilisé dans le récepteur d'un modem de transmission de données pour corriger en bande de base le signal de données reçu, (S(n)) cet égaliseur comprenant un circuit de différence (3) entre le signal reçu et un signal de correction ($\hat{S}$ (n-1)) formé à une fréquence d'échantillonnage par un filtre transversal (6) à coefficients réglables, ce circuit de différence fournissant un signal corrigé (r(n)) qui est appliqué à un circuit de décision (4) restituant le signal de données, ce signal de données restitué étant appliqué à l'entrée du filtre transversal (6) dont les coefficients sont réglés pour rendre minimale une fonction prédéterminée d'un signal d'erreur, caractérisé en ce que les coefficient du filtre transversal sont modifiés à l'aide d'un signal d'erreur (e(n)) qui est déterminé à un présent instant d'échantillonnage en formant la différence entre la valeur du signal corrigé à cet instant d'échantillonnage et la valeur du signal corrigé à un instant d'échantillonnage antérieur, préalablement multipliée par le rapport de la valeur du signal de données restitué au présent instant d'échantillonnage à la valeur du signal de données restitué à l'instant d'échantillonnage antérieur, la modification des coefficients étant effectuée ou non selon que les deuxdites valeurs du signal de données restitué sont différentes de zéro ou au moins l'une des deuxdites valeurs est égale à zéro.

2. Egaliseur auto-adaptatif selon la revendication 1, caractérisé en ce que le présent instant d'échantillonnage et l'instant d'échantillonnage antérieur sont séparés par au moins une période d'échantillonnage.

3. Egaliseur auto-adaptatif selon la revendication 1 ou 2, caractérisé en ce que les coefficients du filtre transversal sont réglés de façon à rendre minimale la valeur quadratique moyenne dudit signal d'erreur.

4. Egaliseur auto-adaptatif selon la revendication 3, caractérisé en ce qu'il comporte un circuit de réglage des coefficients du filtre transversal, agencé pour régler chaque coefficient par récurrences successives selon la formule de récurrence:

$$h_i(n + 1) = h_i(n) + \beta_i d(n - i).e(n)$$

$h_i(n)$ et $h_i(n + 1)$ étant les valeurs du coefficient $h_i$ aux récurrences $n$ et $n + 1$,

$\beta$ étant un coefficient inférieur à 1,

$d(n - i)$ étant une donnée stockée dans le filtre transversal et correspondant au coefficient $h_i$,

$e(n)$ étant ledit signal d'erreur.

5. Egaliseur auto-adaptatif selon la revendication 4, convenant pour corriger un signal de données reçu, résultant du côté émission d'un signal de données en bande de base à deux niveaux ou d'un signal de données en bande de base à trois niveaux résultant d'un codage pseudoternaire de données à deux niveaux, le circuit de décision restituant des données à deux niveaux positif et négatif, cet égaliseur étant caractérisé en ce qu'il comporte un circuit de calcul pour former le signal d'erreur $e(n)$ comme la différence ou la somme des valeurs du signal corrigé au présent instant d'échantillonnage $n$ et à un instant d'échantillonnage antérieur selon que les valeurs du signal de données restitué au présent instant d'échantillonnage $n$ et à l'instant d'échantillonnage antérieur ont le même signe ou des signes différents.

6. Egaliseur auto-adaptatif selon la revendication 3, caractérisé en ce qu'il comporte un circuit de réglage des coefficients du filtre transversal agencé pour régler chaque coefficient $h_i$ par récurrences successives selon la formule de récurrence:

$$h_i(n + 1) = h_i(n) + \beta.d(n - i).Sgn[e(n)]$$ $Sgn[e(n)]$ étant un signal caractérisant le signe dudit signal d'erreur $e(n)$.

7. Egaliseur auto adaptatif selon la revendication 6, convenant pour corriger un signal de données reçu, résultant du côté émission d'un signal de données en bande de base à deux niveaux, ou d'un signal de données en bande de base à trois niveaux résultant du codage pseudoternaire de données à deux niveaux, le circuit de décision du récepteur restituant des données à deux niveaux positif et négatif, cet égaliseur étant caractérisé en ce qu'il comporte un circuit de calcul pour former le signal $Sgn[e(n)]$ comme le signe de la différence ou de la somme des valeurs du sinal corrigé au présent instant d'échantillonnage $n$ et à un instant d'échantillonnage antérieur selon que les valeurs du signal de données restitué au présent instant d'échantillonnage $n$ et à l'instant d'échantillonnage antérieur ont le même signe ou des signes différents.

8. Egaliseur auto-adaptatif selon la revendication 7, caractérisé en ce que le circuit de calcul formant le signal $Sgn[e(n)]$ comporte le montage en cascade de deux circuits d'échantillonnage et de maintien actionnés par deux signaux d'horloge complémentaires ayant la fréquence de calcul désirée du signal $Sgn[e(n)]$, le signal corrigé étant appliqué à l'entrée de ce montage en cascade et à une entrée de deux circuits odmparateurs, le signal de sortie dudit montage en cascade étant appliqué à l'autre entrée d'un desdits circuita comparateurs et, par l'intermédiaire d'un amplificateur inverseur, à l'autre entrée de l'autre circuit comparateur, ces deux circuits comparateurs formant respectivement des signaux $\Delta(n)$ et $\Sigma(n)$ caractérisant le signe de la différence et de la somme des valeurs du signal corrigé à l'instant d'échantillonnage $n$ et à l'instant d'échantillonnage antérieur.

9. Egaliseur auto-adaptatif selon la revendication 7 ou 8, caractérisé en ce que le circuit de calcul formant le signal $Sgn[e(n)]$ comporte un circuit OU Exclusif dont une entrée reçoit le signal de sortie du circuit de décision et l'autre entrée reçoit le signal de sortie d'une bascule échantillonnant le signal de sortie du circuit de décision à la fréquence de calcul du signal $Sgn[e(n)]$, ce circuit OU Exclusif fournissant un signal $C(n)$ caracérisant le produit des signes desdites valeurs du signal de données estitué à l'instant d'échantillonnage $n$ et à un instant d'échantillonnage antérieur.

10. Egaliseur auto-adaptatif selon les revendications 8 et 9, caractérisé en ce que les signaux $\Delta(n)$, $\Sigma(n)$, $C(n)$ sont appliqués à des bascules pour être échantillonnés à la fréquence de calcul du signal $Sgn[e(n)]$, les échantillons des signaux $\Delta(n)$ et $\Sigma(n)$ étant appliqués à un dispositif d'aiguillage commandé par les échantillons du signal $C(n)$ pour former le signal $Sgn[e(n)]$ par des échantillons du signal $\Delta(n)$ ou du signal $\Sigma(n)$.

## Patentansprüche:

1. Selbstadaptiver Entzerrer zum Gebrauch in dem Empfänger eines Datenübetragungsmodens zur Korrektur des empfangenen Datensignals [$s(n)$] in dem Basisband, wobei dieser Entzerrer eine Schaltung (3) aufweist zur Erzeugung der Differenz zwischen dem empfangenen Signal und einem mit einer Abtastfrequenz auftretenden Korrektursignal [$\hat{S}(n-1)$], das durch ein Transversalfilter (6) mit regelbaren Koeffizienten gebildet wird, wobei diese Differenzschaltung ein korrigiertes Signal [$r(n)$] liefert, das einer das Datensignal wiederherstellenden Entscheidungsschaltung (4) zugeführt wird, wobei dieses wiederhergestellte Datensignal dem Eingang des Transversalfilters (6) zugeführt wird, dessen Koeffizienten geregelt werden um eine vorbestimmte Funktion des Fehlersignals zu minimalisieren, dadurch gekennzeichnet, dass die Koeffizienten des Transversalfilters mit Hilfe eines Fehlersignals [$e(n)$] geändert werden, das zu einem augenblicklichen Abtastzeitpunkt durch Bildung der Differenz zwischen dem Wert des korrigierten Signals zu dem augenblicklichen Abtastzeitpunkt und dem Wert des korrigierten Signals zu einem vorhergehenden Abtastzeitpunkt ermittelt wird, wobei dieser letzte Wert vorher durch das Verhältnis zwischen dem Wert des wiederhergestellten Datensignals zu dem augenblicklichen Abtastzeitpunkt und dem Wert des wiederhergestellten Datensignals zu dem vorhergehenden Abtastzeitpunkt multipliziert wird, wobei das Ändern der Koeffizienten wohl oder nicht durchgeführt wird, je nachdem die genannten zwei Werte des wiederhergestellten Datensignals von Null abweichen oder wenigstens einer der genannten zwei Werte gleich Null ist.

2. Selbstadaptiver Entzerrer nach Anspruch 1, dadurch gekennzeichnet, dass der augenblickliche Abtastzeitpunkt und der vorhergehende Abtastzeitpunkt um wenigstens eine Abtastperiode auseinanderliegen.

3. Selbstadaptiver Entzerrer nach Anspruch 1 oder 2, dadurch gekennzeichnet, dass die Koeffizienten des Transversalfilters eingestellt werden um den mittleren quadratischen Wert des genannten Fehlersignals zu minisalisieren.

4. Selbstadaptiver Entzerrer nach Anspruch 3, dadurch gekennzeichnet, dass der Entzerrer eine Regelschaltung für die Koeffizienten des Transversalfilters aufweist zum iterativen Einstellen jedes Koeffizienten entsprechend der Iterationsformel:

$$h_i(n + 1) = h_i(n) + \beta.d(n - i).e(n)$$

wobei h (n) und h (n + 1) die Werte des Koeffizienten h zu den Wiederholungen n und n + 1 sind, wobei $\beta$ ein Koeffizient kleiner als 1 ist, wobei d(n - i) ein in dem Transversalfilter gespeichertes und dem Koeffizienten $h_i$ entsprechendes Datensymbol ist, und wobei e(n) das genannte Fehlersignal ist.

5. Selbstadaptiver Entzerrer nach Anspruch 4, geeignet zum Korrigieren eines empfangenen Datensignals, das sendeseitig aus einem Zwei-Pegel-Basisbanddatensignal herrührt oder aus einem durch pseudoternäre Codierung von Zwei-Pegeldaten erhaltenen Drei-Pegel-Basisbanddatensignal, wobei die Entscheidungsschaltung Daten mit einem positiven und einem negativen Pegel wiederherstellt, dadurch gekennzeichnet, dass der Entzerrer eine Rechenschaltung aufweist zum Bilden des Fehlersignals e(n) als die Differenz oder als die Summe der Werte des korrigierten Signals zu dem augenblicklichen Abtastzeitpunkt n und zu einem vorhergehemden Abtastzeitpunkt, je nachdem die Werte der zu dem augenblicklichen Abtastzeitpunkt n und zu dem vorhergehenden Abtastzeitpunkt wiederhergestellten Datensignale dasselbe Vorzeichen oder unterschiedliche Vorzeichen haben.

6. Selbstadaptiver Entzerrer nach Anspruch 3, dadurch gekennzeichnet, dass der Entzerrer eine Regelschaltung für dis Koeffizienten des Transversalfilters aufweist zum iterativen Einstellen jedes Koeffizienten $h_i$ entsprechend der Iterationsformel:

$$h_i(n + 1) = h_i(n) + \beta.d(n - i).Sgn[e(n)]$$

wobei Sgn[e(n)] ein Signal ist, das das Vorzeichen des genannten Fehlersignals e(n) kennzeichnet.

7. Selbstadaptiver Entzerrer nach Anspruch 6, geeignet zum Korrigieren eines empfangenen Datensignals, das sendeseitig aus einem Zwei-Pegel-Basisbanddatensignal herrührt oder aus einem durch pseudoternäre Codierung von Zwei-Pegeldaten erhaltenen Drei-Pegel-Basisbanddatensignal, wobei die Entscheidungsschaltung des Empfängers Daten mit einem positiven und einem negativen Pegel wiederherstellt, dadurch gekennzeichnet, dass der Entzerrer eine Rechenschaltung aufweist zum Bilden des Signals Sgn[e(n)] als das Vorzeichen der Differenz oder der Summe der Werte des korrigierten Signals zu dem augenblicklichen Abtastzeitpunkt n und zu einem vorhergehenden Abtastzeitpunkt, je nachdem die Werte der zu dem augenblicklichen Abtastzeitpunkt n und zu dem vorhergehemden Abtastzeitpunkt wiederhergestellten Datensignale dasselbe Vorzeichen oder unterschiedliche Vorzeichen haben.

8. Selbstadaptiver Entzerrer nach Anspruch 7, dadurch gekennzeichnet, dass die das Signal Sgn[e(n)] bildende Rechenschaltung eine Reihenschaltung aus zwei Abtast-und-Halteschaltungen aufweist, die durch zwei komplementäre Taktsignale mit der gewünschten Rechen geschwindigkeit des Signals Sgn[e(n)] betrieben werden, wobei das korrigierte Signal dem Eingang dieser Reinenschaltung zugeführt wird, sowie dem einen Eingang zweier Vergleichsschaltungen, wobei das Ausgangssignal der genannten Reinenschaltung dem anderen Eingang einer der genannten Vergleichsschaltungen zugeführt wird und über einen Umkehrverstärker dem anderen Eingang der anderen Vergleichsschaltung, wobei diese zwei Vergleichsschaltungen die Signale $\Delta$ (n) und $\Sigma$ (n) bilden, die das Vorzeichen der Differenz bzw. der Summe der Werte des zu dem Abtastzeitpunkt n und zu dem vorhergehenden Abtastzeitpunkt korrigierten Signals kennzeichen.

9. Selbstadaptiver Entzerrer nach Anspruch 7 oder 8, dadurch gekennzeichnet, dass die das Signal Sgn[e(n)] bildende Rechenschaltung eine Exklusiv-ODER-Torschaltung aufweist, deren eine Eingang das Ausgangssignal der Entscheidungsschaltung und deren andere Eingang das Ausgangssignal einer bistabilen Kippschaltung erhält, die das Ausgangssignal der Entscheidungsschaltung mit der Rachengeschwindigkeit des Signals Sgn[e(n)] abtastet, wobei diese Exklusiv-ODER-Torschaltung ein Signal C (n) erzeugt, das das Produkt der Vorzeichen der genannten Werte des zu dem Abtastzeitpunkt n und zu einem vorhergehenden Abtastzeitpunkt wiederhergestellten Datensignals kennzeichnet.

10. Selbstadaptiver Entzerrer nach Anspruch 8 und 9, dadurch gekennzeichnet, dass die Sigale $\Delta$ (n), $\Sigma$ (n), C(n) bistabilen Kippschaltungen zugeführt werden um mit der Rechengeschwindigkeit des Signals Sgn[e(n)] abgetastet zu werden, wobei die Abtastwerte der Signale $\Delta$ (n) und $\Sigma$ (n) einem Wechselschalter zugeführt werden, der durch die Abtastwerte des Signals C (n) betätigt wird um das Signal Sgn[e(n)] durch die Abtastwerte des Signals $\Delta$ (n) oder des Signals $\Sigma$(n) zu bilden.

11

## 0 106 406

## Claims

1. A self-adaptive equalizer used in the receiver of a data transmission modem for correcting in the baseband the data signal received [S (n)], this equalizer comprising a difference circuit (3) receiving the received signal and a correction signal [ŝ (n-1)] formed at a sampling frequency by a transversal filter (6) having adjustable coefficients, this difference circuit producing a corrected signal [r(n)] which is applied to a decision circuit (4) recovering the data signals, this recovered data sisnal being applied to the input of the transversal filter (6) whose coefficients are adjusted so as to minimize a predetermined function of an error signal, characterized in that the coefficients of the transversal filter are modified with the aid of an error signal [e(n)] determined at an actual sampling instant by forming the difference between the value of the corrected signal at that sampling instant and the value of the corrected signal at a previous sampling instant, multiplied previously by the ratio between the value of the recovered data signal at the actual sampling instant and the value of the recovered data signal at the previous sampling instant, modifying the coefficients being effected or not effected depending on whether the said two values of the recovered data signal differ from zero or at least one of the said two values is equal to zero.

2. A self-adaptive equalizer as clamed in Claim 1, characterized in that the actual sagpling instant and the previous sampling instant are separated by at least one sampling period.

3. A self-adaptive equalizer as claimed in Claim 1 or Claim 2, characterized in that the coefficients of the transversal filter are adjusted so as to minimize the mean-square value of the said error signal.

4. A self-adaptive equalizer as claimed in Claim 3, characterized in that it comprises a control circuit for the coefficients of the transversal filter, arranged to iteratively adjust each coefficient according to the recursion formula:

$$h_i(n + 1) = h_i(n) + \beta.d(n-i).e(n)$$

$h_i(n)$ and $h_i(n + 1)$ being the values of the coefficient $h_i$ at the iterations $n$ and $(n + 1)$, $\beta$ being a coefficient less than 1, $d(n - i)$ being a datum stored in the transversal filter and corresponding to the coefficient $h_i$, $e(n)$ being the said error signal.

5. A self-adaptive equalizer as claimed in Claim 4, suitable for correcting a received data signal which results from a two-level baseband data signal at the transmitter end, or a three-level baseband data signal produced by a pseudo-ternary encoding of two-level data, the decision circuit recovering data having a positive and a negative level, this equalizer being characterized in that it comprises a calculating circuit for forming the error signal $e(n)$ as the difference or the sum of the values of the corrected signal at the actual sampling instant $n$ and at a previous sampling instant, depending on whether the values of the data signals recovered at the actual sampling instant $n$ and at the previous sampling instant have the same sig or different signs.

6. A self-adaptive equalizer as claim ed in Claim 3, characterized in that it comprises a control circuit for the coefficients of the transversal filter arranged to iteratively adjust each coefficient $h_i$ according to the recursion formula:

$$h_i(n + 1) = h_i(n) + \beta,.d(n - i).Sgn[e(n)]$$

$Sgn[e(n)]$ being a signal characterizing the sign of the said error signal $e(n)$.

7. A self-adaptive equalizer as claimed in Claim 6, suitable for correcting a received data signal which results from a two-level baseband data signal at the transmitter end, or a three-level baseband data signal produced by pseudo-ternary encoding of two-level data, the decision circuit of the receiver recovering data having a positive and a negative level, this equalizer being characterized in that it comprises a calculating circuit for forming the signal $Sgn[e(n)]$ as the sig of the difference or the sum of the values of the corrected sigal at the actual sampling instant $n$ and at a previous sampling instant, depending on whether the values of the data signal recovered at the actual sampling instant $n$ and at the previous sampling instant have the same sign or different signs.

8. A self-adaptive equalizer as clamed in Claim 7, characterized in that the calculating circuit forming the signal $Sgn[e(n)]$ comprises a cascade arrangement of two sample-and-hold circuits activated by two complementary clock signals having the desired calculating rate of the signal $Sgn[(e(n)]$, the corrected sigal being applied to the input of this cascade arrangement and to an input of two comparator cirouits, the output signal of the said cascade arrangement being applied to the other input of one of the said comparator circuits and, via an inverting amplifier, to the other input of the other comparator circuit, these two comparator circuits forming the signals $\Delta (n)$ and $\Sigma (n)$, respectively, which characterize the sig of the difference and of the sum of the values of the corrected signal at the sampling instant $n$ and at the previous sampling instant.

9. A self-adaptive equalizer as clamed in Claim 7 or 8, characterized in that the calculating circuit forming the signal $Sgn[e(n)]$ comprises an Exclusive-OR gate, one input of which receives the output signal of the decision circuit and the other input receives the output sigal of a bistable trigger circuit samling the output signal of the decision circuit at the calculating rate of the signal $Sgn[e(n)]$, this Exclusive-OR gate producing a signal $C(n)$ which is characteristic of the product of the signs of the said values of the recovered data signal at the sampling instant $n$ and at a previous sampling instant.

10. A self-adaptive equalizer as clamed in Claims 8 and 9, characterized in that the signal $s\Delta (n)$, $\Sigma (n)$, $C(n)$ are applied to bistable trigger circuits to be sampled at the calculating rate of the signal $Sgn[ e(n)]$, the samples of the signals $\Delta (n)$ and $\Sigma (n)$ being applied to a switch controlled by the samples of the sigal $C(n)$ to form the signal $Sgn[e(n)]$ by the samples of the sigal $\Delta (n)$ or of the sigal $\Sigma (n)$.

12

FIG.1

FIG.2

FIG.3

FIG.4

FIG.5